Europäisches Patentamt

European Patent Office

Office européen des brevets

(19)

(11) Publication number: **0 306 338**
**A1**

(12) # EUROPEAN PATENT APPLICATION

(21) Application number: 88308165.5

(22) Date of filing: 02.09.88

(51) Int. Cl.4: **G 02 F 1/133**

(30) Priority: 04.09.87 JP 221490/87

(43) Date of publication of application:
08.03.89 Bulletin 89/10

(84) Designated Contracting States: **DE FR GB IT**

(71) Applicant: **SEIKO INSTRUMENTS INC.**
**31-1, Kameido 6-chome Koto-ku**
**Tokyo 136 (JP)**

(72) Inventor: **Toyama, Motoo**
**Seiko Instruments Inc. 31-1 Kameido**
**6-chome Koto-ku Tokyo (JP)**

(74) Representative: **Caro, William Egerton et al**
**J. MILLER & CO. Lincoln House 296-302 High Holborn**
**London WC1V 7JH (GB)**

(54) **Electro-optical device.**

(57) An electro-optical device comprises a pair of substrates (7,10) at least one of which is light transmissive, an electro-optical material (5) sandwiched between the substrates and electro-optical switching elements (13) disposed on the inner surface of at least one of the substrates. Each switching element (13) includes a first electrode layer (8), a non-linear resistive layer (6) and an electrode (9) electrically connected to the first electrode layer (8) through the non-linear resistive layer (6). An electrode layer (11) is disposed on the inner surface of the other substrate (10) to define pixels or picture elements between the second electrode layer (11) and the electrode (9) for applying a voltage to the electro-optical material (5) in a desired picture element. The non-linear resistive layer (6) is substantially composed of amorphous alloy material consisting mainly of germanium and one of carbon, nitrogen and oxygen.

FIG.1

EP 0 306 338 A1

Description

## ELECTRO-OPTICAL DEVICE

This invention relates to electro-optical devices, for example, for use in the display panels of measuring instruments, instrument panels of motor vehicles, personal computers, picture display apparatus, television sets, liquid crystal shutters for printers, etc.

Small size and light weight electro-optical devices have been realised using materials, such as liquid crystal materials, exhibiting electro-chromism or the electro-optical effect. Recently, for the purpose of increasing the amount of information handled in electro-optical devices of this type, attention has been paid to a three-terminal active matrix liquid crystal display device made of thin film transistors (TFT), MOS transistors formed of mono-crystalline silicon, etc., and a two-terminal active matrix liquid crystal display device in which each non-linear resistive element is provided in series with each liquid crystal pixel or picture element.

The two-terminal active matrix liquid crystal display device includes a small number of films formed in place as compared with the three-terminal active matrix liquid crystal display device, and thus needs only a reduced number of photo-etching processes. Accordingly, its advantages are that the possibility of the display device becoming defective owing to dust and the like is small and that the precision of patterning is not necessarily particularly high. Hence, this type of display device can be made at relatively low cost with a relatively large area.

Two-terminal active matrix electro-optical devices employ one of the following systems:

### (1) MIM (metal-insulator-metal) system.

This system is disclosed, for example, in US-A-4,413,883 and can be driven by low voltage, but has the disadvantage that the number of divisions cannot be increased very much because its current-voltage characteristic is not steep enough.

### (2) Ring diode system.

This system features two amorphous silicon pin diodes connected in parallel and reversely with each other, as disclosed in GB-A-2,129,183, and its current-voltage characteristic is comparatively steep. However, it has the disadvantage that the configuration of elements and the manufacturing process are complicated. That is, each pixel needs two diodes and the diodes must be made of three layers (p-layer, i-layer and n-layer) of amorphous silicon.

### (3) ZnO varistor system.

This system is disclosed, for example, in JP-A-105285/1980. It has a good non-linear characteristic, but its defect is that a driving voltage as high as some tens of volts is needed and a conventional IC for driving liquid crystal material cannot be used.

Also, it has the disadvantage that this system cannot provide a transmission type display because zinc oxide (ZnO) of which a substrate is composed is opaque.

### (4) Back-to-back diode system

This system utilises the property of a Schottky junction between amorphous silicon and a metal electrode which shows a non-linear characteristic, thus its configuration is comparatively simple. However, this system has not yet provided a sufficient non-linear characteristic for use in an electro-optical device.

To drive an electro-optical liquid crystal device, the current-voltage characteristic of a non-linear element film and the allocation of voltage to a liquid crystal layer must be optimised, and, therefore, the selection of the resistance and capacitance of the non-linear element film and of the liquid crystal layer must be optimised.

In the prior art, for electro-optical devices of the MIM system or the like, a compound (e.g. $Ta_2O_5$) having a certain specific resistance and a certain dielectric constant is selected as the material of non-linear elements, and the resistance of a non-linear element film is determined by regulating film thickness. However, if the film thickness is varied to make the film resistance approach a desired value, the capacitance of the non-linear elements varies also and cannot approach a desired value. On the other hand, if the film thickness is regulated to make the capacitance approach the desired value, the resistance cannot approach the desired value. Thus, the prior art cannot meet both the current-voltage characteristic of the non-linear element film and the allocation of voltage to the liquid crystal layer simultaneously.

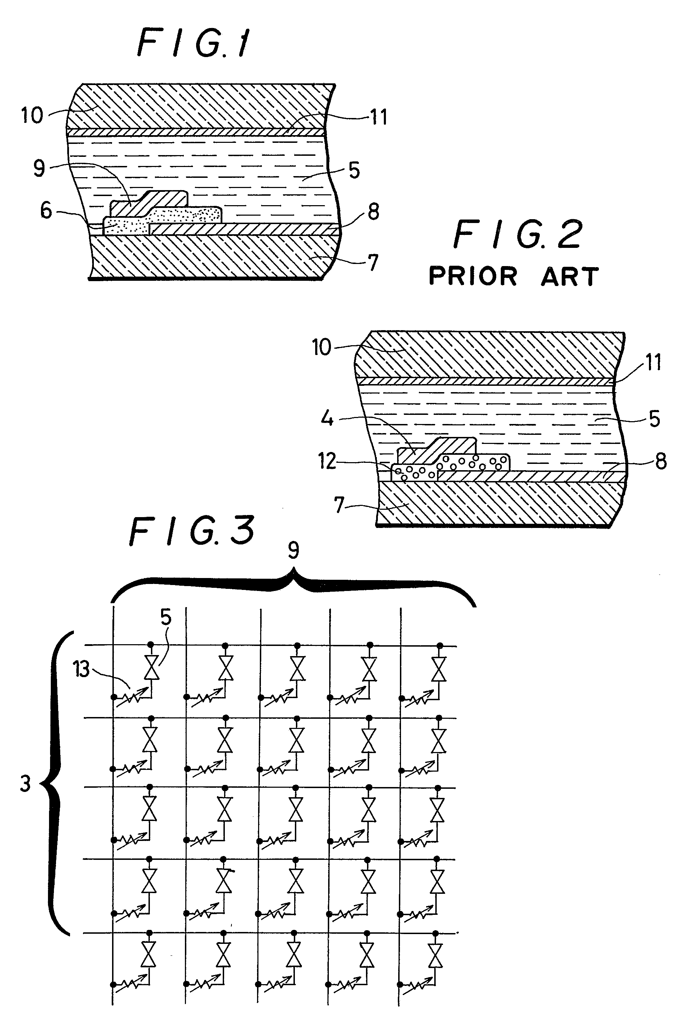

Figure 2 illustrates a known liquid crystal electro-optical device devised to overcome the foregoing defects and is disclosed in greater detail, for example, in EP-A-182,484 and EP-A-202,092.

The electro-optical device of Figure 2 has a lower transparent substrate 7 which is made of ordinary glass, and a transparent conductive film 8 which is formed by magnetron sputtering of an indium tin oxide (ITO). Photo-etching is used to form a pattern on the film 8. A non-linear resistance layer 12 is made of an amorphous material consisting principally of silicon and oxygen, principally of silicon and nitrogen, or principally of silicon and carbon.

A metal electrode 4 is either a row electrode or a column electrode. A liquid crystal layer 5 has a twisted nematic structure. An upper transparent substrate 10 is made of ordinary glass. A transparent conductive film 11 of indium tin oxide is formed on the upper transparent substrate 10 and is used either as a row electrode or as a column electrode.

Row liquid crystal driving electrodes X and column liquid crystal driving electrodes Y usually each 100 to 1000 in number are formed on the substrate 7,10.

Each X - Y intersection has the liquid crystal layer 5 and the non-linear resistance element 12 formed in place.

To provide a large area and high resolution liquid crystal electro-optical device of this type or one having a large number of pixels whilst keeping high contrast, the non-linearity of the non-linear resistance elements 12 must be sufficiently large. These non-linear characteristics are usually explained by the conduction mechanism called the "Frenkel-Poole current", as expressed by the following formula:

$$I = CEexp\{-q(\emptyset - bE^{1/2})kT\}$$

wherein:

I: Current;
E: Electric field;
k: Boltzmann constant;
q: Elementary charge;
T: Absolute temperature; and
C, $\emptyset$, b: Values intrinsic to substances.

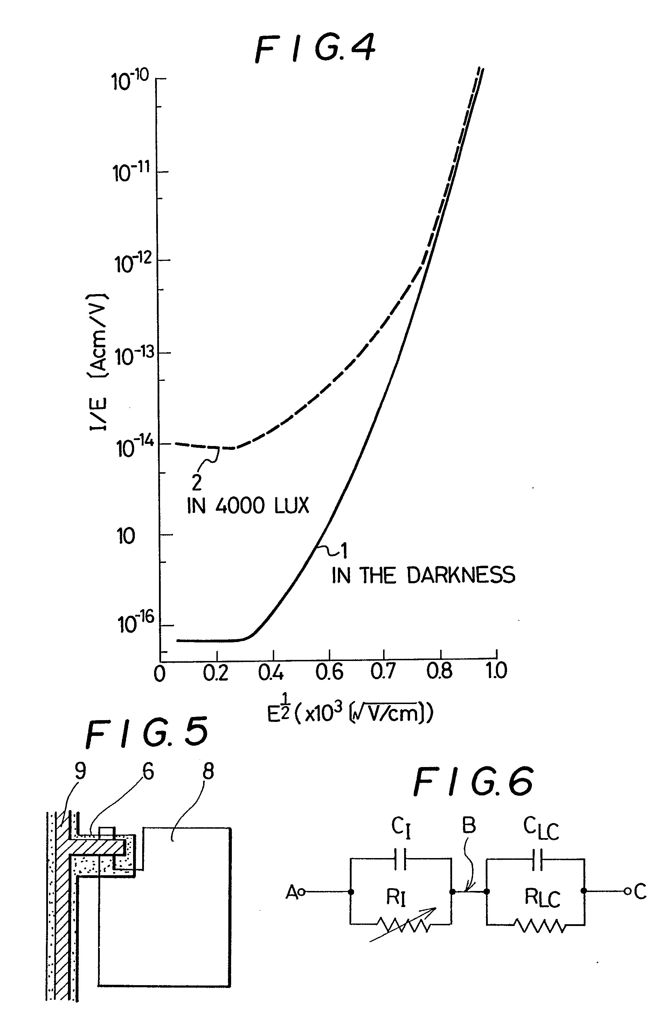

However, the Frenkel-Poole current is a dominant conduction mechanism in a high field region, but the ohmic current becomes dominant in a low field region. Figure 4 is a graph plotting the Frenkel-Poole current of the current field characteristics in the case where an amorphous silicon nitride film of the prior art is used as the non-linear resistance film. Curve 1 plots the characteristics in the dark, and curve 2 plots the characteristics with an illumination of 4000 luxes by a white luminescent lamp. Accordingly, an electro-optical device using non-linear resistance elements made of an amorphous material composed mainly of silicon, makes it possible to obtain a high contrast in darkness. As exemplified by Figure 4, however, the amorphous material composed mainly of silicon has such a high photo-conductivity that the resistance in a low field region falls to a lower level than that in the dark due to the photo-current. In the case where the liquid crystal electro-optical device is used out-doors in daylight, the voltage applied to the liquid crystal layer 5 is difficult to hold, giving rise to the problem that contrast of the liquid crystal electro-optical device falls.

The present invention seeks to provide an electro-optical device employing two-terminal non-linear elements capable of being driven by low voltage and giving a relatively large contrast. The present invention also seeks to provide an electro-optical device which permits free selection of the composition of non-linear elements, thereby allowing the realisation of optimum current-voltage characteristics and the optimum allocation of voltage to a liquid crystal layer. Further, the present invention seeks to provide a relatively large size electro-optical device, i.e. one having a relatively large number of pixels or picture elements, with relatively high contrast, decreased display flecks, and reduced power consumption. Moreover, the present invention seeks to provide an electro-optical device employing a thin film having a low photo-conductivity as a non-linear resistance film, thereby to increase the contrast under an intense light source.

According to one aspect of the present invention, there is provided an electro-optical device comprising: a pair of substrates, at least one of which is light transmissive; an electro-optical material sandwiched between the substrates; a plurality of electro-optical switching elements disposed on an inner surface of at least one of the substrates, each switching element including a first electrode layer, a non-linear resistive layer and electrode means electrically connected to the first electrode layer through the non-linear resistive layer; and a second electrode layer disposed on an inner surface of the other substrate to define a plurality of picture elements between the second electrode layer and the electrode means for applying a voltage to the electro-optical material in a desired picture element, characterised in that the non-linear resistive layer is substantially composed of amorphous alloy material consisting mainly of germanium and one of carbon, nitrogen and oxygen.

According to another aspect of the present invention, there is provided an electro-optical device comprising: a substrate; a plurality of electro-optical switching elements on the substrate, each of the switching elements including a first electrode layer, a non-linear resistive layer and electrode means electrically connected to the first electrode layer through the non-linear resistive layer, characterised in that the non-linear resistive layer is substantially composed of amorphous alloy material consisting mainly of germanium and one of carbon, nitrogen and oxygen.

According to a third aspect of the present invention, there is provided a matrix electro-optical device comprising: a pair of substrates spaced apart from each other, at least one of the substrates being transparent; a plurality of counter electrodes disposed on an inner surface of one of the substrates; electrode means disposed on an inner surface of the other substrate in opposed relation to the counter electrodes; an electro-optical layer interposed between the counter electrodes and the electrode means to define a plurality of picture elements therebetween, in operation, selectively driven to change their optical state; a plurality of drive electrodes disposed on the inner surface of the other substrate and over-lapping with the electrode means; and a non-linear resistive layer interposed between the electrode means and drive electrodes and their over-lapping portions to define a plurality of switching elements series-connected to the corresponding picture elements, the arrangement being such that, in operation, the switching elements are selectively turned on in response to a voltage applied between the counter and drive electrodes to drive the series-connected picture elements, characterised in that the non-linear resistive layer is an amorphous alloy material consisting mainly of germanium and one of carbon, nitrogen and oxygen.

Preferably the atom composition ratios Ge/(Ge+N) = X, Ge/(Ge+0) = Y and Ge/(Ge+C) = Z of amorphous alloy material are as follows, respectively:

**0.2 ≤ X ≤ 0.8, 0.1 ≤ Y ≤ 0.8 and 0.1 ≤ Z ≤ 0.9**

and, preferably,

**0.2 ≦ X ≦ 0.7, 0.2 ≦ Y ≦ 0.6 and 0.3 ≦ Z ≦ 0.6**

The non-linear resistive layer may be light transmissive and may have a thickness of 500 to 5000 Å.

The non-linear resistive layer preferably is provided over the whole surface of all picture elements.

The amorphous alloy material may further contain any one or more of hydrogen, phosphorous, boron or fluorine.

The invention is illustrated, merely by way of example, in the accompanying drawings, in which:-

Figure 1 is a longitudinal cross sectional view of a liquid crystal electro-optical device according to the present invention which utilises non-linear resistance material composed mainly of germanium and at least one of carbon, nitrogen and oxygen;

Figure 2 is a cross sectional view of a known liquid crystal electro-optical device which utilises non-linear resistance material composed mainly of silicon and nitrogen;

Figure 3 is a circuit diagram of a conventional liquid crystal electro-optical device using non-linear resistance elements;

Figure 4 is a graph of the Frankel-Poole current field characteristics of a non-linear resistance element made of an amorphous material composed mainly of silicon and nitrogen;

Figure 5 is a top plan view of one pixel of the liquid crystal electro-optical device of Figure 1;

Figure 6 is an equivalent circuit diagram of Figure 5; and

Figure 7 is a graph of the ratio $I_p/I_d$ of the current $I_p$ under the illumination of 4000 luxes by a white fluorescent lamp to the current $I_d$ in the dark against the electric field applied to a non-linear resistance element, a broken curve a corresponding to the case in which there is used non-linear resistive material which is composed mainly of germanium and nitrogen according to one embodiment of the present invention and a solid curve b corresponding to the case in which there is used non-linear resistive material composed mainly of silicon and nitrogen according to the prior art.

In order to solve the above specified problems of known electro-optical devices, the present invention uses a non-linear resistance film of an amorphous alloy which is composed mainly of germanium and at least one of carbon, nitrogen and oxygen. As a result, a non-linear resistance element having a low photo-conductivity is obtained and used for driving the electro-optical device.

The present invention will be chiefly described in connection with an embodiment of a liquid crystal matrix electro-optical device which uses a non-linear resistance element made of an amorphous material composed mainly of germanium and nitrogen.

Figure 1 is a sectional view of an electro-optical device according to the present invention, having a substrate on which non-linear resistance elements are formed. Figure 5 is a plan view of a pixel or picture element showing one of these non-linear resistance elements. In Figures 1 and 5 a polariser is not shown for ease of illustration.

In Figures 1 and 5 a substrate 7 is transparent and ordinary glass may be used. A transparent conductive film 8 having a thickness from about 100 Å to 500 Å is formed by magnetron sputtering of an indium tin oxide on the substrate 7. Photo-etching is used to pattern the film 8. A non-linear resistance layer 6 is made of an amorphous material consisting principally germanium and at least one of nitrogen, carbon and oxygen.

A metal electrode 9 is either a row electrode or a column electrode. In this embodiment, the metal electrode 9 is formed with a thickness of about 3000 Å by sputtering metallic chromium. Instead of chromium, it is possible to use Al, Cu, NiCr, Ag, Au and Ta. The metal electrode 9 is selectively removed by photo-etching, and while a photo-sensitive resin is not removed, the layer 6 is selectively etched. As a result, a non-linear resistance element is produced by two photo-mask steps and three etching steps. In Figure 1, but not in Figure 5, there is shown a liquid crystal layer 5 which is about 7 microns thick, and which uses a twisted nematic structure. An upper transparent substrate 10 is made of ordinary glass. A transparent conductive film 11 of indium tin oxide is formed on the upper transparent substrate, and is patterned to be used either as a row electrode or as a column electrode.

Figure 6 is an equivalent circuit diagram of the pixel of Figure 5. A non-linear resistance element and a liquid crystal layer are shown connected in series with each other. Symbol $C_{LC}$ represents the capacitance of the liquid crystal layer, $R_{LC}$ is its resistance, and $C_I$ is the capacitance of the non-linear resistance element with $R_I$ representing its resistance. The resistance $R_I$ is a function of the voltage between points A and B.

Driving this type of liquid crystal electro-optical device is generally performed by the following multiplex driving system called a voltage uniformalising driving system.

That is, a large number of row electrodes 3 shown in Figure 3 are sequentially selected one at a time, and during such selection periods data is written in by the column electrodes 9. To present a display with sufficient contrast, it is necessary that an effective voltage to be applied to a liquid crystal material at a selected point should be larger than the saturation voltage of the liquid crystal material and that the effective voltage to be applied to the liquid crystal material at non-selected points should be smaller than the threshold voltage of the liquid crystal material. When non-linear resistance elements 13 are made of a film having sufficient non-linearity, the resistance of the non-linear resistance element 13 at the selected point becomes low at the time of writing. As a result, the voltage is easily imposed on the liquid crystal material 5, the resistance of the non-linear resistance element 13 becomes high during retaining periods, and the voltage imposed on the liquid crystal material 5 becomes easily retained. On the other hand, at each non-selected point, the resistance of the non-linear resistance element 13 is not as low as that of the selected point, the voltage is imposed on the liquid crystal material 5 to some extent and this relatively little voltage is retained so that even a liquid crystal electro-optical device having a comparatively large number of divisions can provide a panel having high contrast.

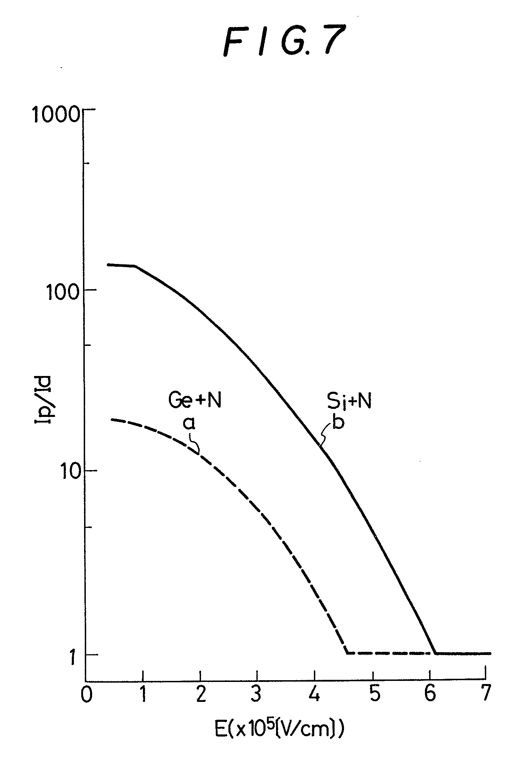

The amorphous material composed mainly of germanium and nitrogen was formed in the case of the present embodiment to have a thickness of about 1500 Å by a plasma CVD method using a mixture of nitrogen gas, ammonia gas and germane gas ($GeH_4$). The amorphous material prepared by this method and composed mainly of germanium and nitrogen contains hydrogen of $10^{22}$ [$cm^{-3}$]. Figure 7 is a graph plotting the ratio of the so called "photo-current" $I_p$ under a light illumination of 4000 luxes by a white fluorescent lamp to the dark current $I_d$ against the electric field applied to the non-linear elements. A broken curve a corresponds to the case in which there is used non-linear resistance material composed mainly of germanium and nitrogen according to one embodiment of the present invention, and a solid curve b corresponds to the case in which there is used a non-linear resistance material composed mainly of silicon and nitrogen according to the prior art. It will be appreciated from Figure 7 that the amorphous material composed mainly of germanium and nitrogen has its photo-conductivity reduced to about one fifth or less compared with the amorphous material composed mainly of silicon and nitrogen. It is possible that this is caused by the following reasons.

Generally speaking, amorphous materials are known to contain a number of dangling bonds, the higher density of which decreases the photo-conductivity the more. Since the Ge-H bonds of germane ($GeH_4$) or the like used as the source gas of germanium are weaker than the Si-H bonds of mono-silane ($SiH_4$) or disilane ($Si_2H_6$) used as the source gas of silicon, they are liable to be cut or broken during the film-forming step and are left as dangling bonds in the thin film thereby reducing the photo-conductivity.

Thus, by using an amorphous alloy of low photo-conductivity containing germanium as one of its main components as the non-linear resistance material, the optical leakage current of the non-linear resistance element in a low voltage region can be reduced to provide a liquid crystal electro-optical device which can retain its quality even under intense light illumination such as out-doors.

The specific resistance of the aforementioned amorphous alloy material composed mainly of germanium and nitrogen depends mainly upon the composition of germanium and nitrogen such that it increases the higher the ratio of nitrogen. This composition ratio of germanium and nitrogen can easily be controlled by, for example, changing the process conditions such as the high frequency power, pressure, substrate temperature, total flow rate of source gas and composition of source gas when that alloy is prepared by the plasma CVD method. The higher the composition ratio of germane gas in the source gas, for example, the more the amount of germanium in the aforementioned amorphous alloy material increases, so that the specific resistance drops to a lower value. Moreover, the non-linearity of the aforementioned film can be controlled by changing its process conditions.

Moreover, the current-voltage characteristics of the aforementioned amorphous material can also be controlled either by mixing several ppms to several percentage points of doping ga such as phosphine, diborane or the like, into the source gas to dope the resulting amorphous material with phosphorous, boron or the like or by diluting the source gas with a rare gas such as argon or with hydrogen gas.

Incidentally, in the embodiment described above, the amorphous gas is prepared by plasma CVD, but it can also be prepared by a CVD method under reduced or normal pressure, or by a sputtering method.

In order to apply the non-linear resistance material of this kind to a liquid crystal electro-optical device, the resistance $R_l$ of the non-linear resistance element may be set in the following manner. The resistance $R_l$ is set: at $10^7$ to $10^8$ [ohms] for a voltage $V_{ON}$ applied when an indication lamp is ON; at $10^8$ [ohms] or more for a maximum voltage $V_{OFF}$ when the lamp is not ON; and at a value equal to the liquid crystal resistance $R_{LC}$ for the voltage $V_{ON}$ applied during the unselected period. The overlap area of the conductor - the amorphous material - is 120 sq. microns, the thickness of the amorphous material is 500 to 5000 Å, and the drive voltage is 30 V or less, the drive can be accomplished with the amorphous alloy material having a composition ratio $Ge/(Ge+N)$ of germanium and nitrogen ranging from 0.2 to 0.8, preferably 0.2 to 0.7. If, on the the other hand, a non-linear resistance element for realising the same drive voltage is made of an amorphous material composed mainly of silicon and nitrogen, the reduction in the photo-conductivity has been confirmed to take place over all the above specified region (0.2 to 0.8) of the composition ratio of germanium and nitrogen.

Amorphous alloy material composed mainly of germanium and oxygen, or germanium and carbon shows an E - $I_p/I_d$ characteristic very similar to that of (Ge+N) as shown in Figure 7. High contrast driving of an electro-optical device can be carried out with an amorphous material with a composition ratio $Ge(Ge+0)$ ranging from 0.1 to 0.8, preferably 0.2 to 0.6, and of the composition ratio $Ge/(Ge+C)$ ranging from 0.1 to 0.9, preferably 0.3 to 0.6. It is also possible to utilise (Ge+Si) in place of Ge.

Here, the non-linear resistance element of an electro-optical device according to the present invention makes use of the Frenkel-Poole current which becomes dominant in the high field region of a high resistance material having a constant film thickness. Within a proper operating voltage range, therefore, the tunnel current becomes dominant with an excessivly small film thickness, but the ohmic current becomes dominant with an excessively large film thickness. In either case, the non-linearity of the element decreases.

It has been confirmed that the Frenkel-Poole current is dominant within a normal operating voltage range for the thickness of the aforementioned non-linear resistance thin film ranging from 500 Å to 2 microns.

The present embodiment has been described in connection with the application of the present invention to a liquid crystal electro-optical device. However, the present invention can be applied to an electro-optical device employing other electro-optical effects such as electro-chromism. Thus, it is apparent that an electro-optical device free from degradation in quality for practical use, even in light conditions such as out-doors, can be provided by using an amorphous material containing germanium as one of its main components.

Further, an electro-optical device according to the present invention can reduce the optical leakage current in the low field region of non-linear resistance elements so that it can enjoy the advantage of no fall in contrast in practice even in out-door light conditions.

## Claims

1. An electro-optical device comprising: a pair of substrates (7,10), at least one of which is light transmissive; an electro-optical material (5) sandwiched between the substrates; a plurality of electro-optical switching elements (13) disposed on an inner surface of at least one of the substrates, each switching element including a first electrode layer (8), a non-linear resistive layer (6) and electrode means (9) electrically connected to the first electrode layer (8) through the non-linear resistive layer (6); and a second electrode layer (11) disposed on an inner surface of the other substrate (10) to define a plurality of picture elements between the second electrode layer (11) and the electrode means (9) for applying a voltage to the electro-optical material (5) in a desired picture element, characterised in that the non-linear resistive layer (6) is substantially composed of amorphous alloy material consisting mainly of germanium and one of carbon, nitrogen and oxygen.

2. An electro-optical device comprising: a substrate (7); a plurality of electro-optical switching elements (13) on the substrate, each of the switching elements including a first electrode layer (8), a non-linear resistive layer (6) and electrode means (9) electrically connected to the first electrode layer (8) through the non-linear resistive layer (6), characterised in that the non-linear resistive layer is substantially composed of amorphous alloy material consisting mainly of germanium and one of carbon, nitrogen and oxygen.

3. A matrix electro-optical device comprising: a pair of substrates (7,10) spaced apart from each other, at least one of the substrates being transparent; a plurality of counter electrodes (11) disposed on an inner surface of one of the substrates (10); electrode means (8) disposed on an inner surface of the other substrate (7) in opposed relation to the counter electrodes; an electro-optical layer (5) interposed between the counter electrodes (11) and the electrode means (8) to define a plurality of picture elements therebetween, in operation, selectively driven to change their optical state; a plurality of drive electrodes (9) disposed on the inner surface of the other substrate (7) and over-lapping with the electrode means (8); and a non-linear resistive layer (6) interposed between the electrode means (8) and drive electrodes (9) and their over-lapping portions to define a plurality of switching elements series-connected to the corresponding picture elements, the arrangement being such that, in operation, the switching elements are selectively turned on in response to a voltage applied between the counter and drive electrodes (11,9) to drive the series-connected picture elements, characterised in that the non-linear resistive layer (6) is an amorphous alloy material composed mainly of germanium and one of carbon, nitrogen and oxygen.

4. An electro-optical device as claimed in any preceding claim characterised in that the atom composition ratios $Ge/(Ge+N) = X$, $Ge/(Ge+0) = Y$ and $Ge/(Ge+C) = Z$ of amorphous alloy material are as follows, respectively:

$$0.2 \leq X \leq 0.8, 0.1 \leq Y \leq 0.8 \text{ and } 0.1 \leq Z \leq 0.9$$

and, preferably,

$$0.2 \leq X \leq 0.7, 0.2 \leq Y \leq 0.6 \text{ and } 0.3 \leq Z \leq 0.6$$

5. An electro-optical device as claimed in any preceding claim characterised in that the non-linear resistive layer is light transmissive.

6. An electro-optical device as claimed in any preceding claim characterised in that the non-linear resistive layer has a thickness of 500 to 5000 Å.

7. An electro-optical device as claimed in any preceding claim characterised in that the non-linear resistive layer is formed by means of low pressure CVD, normal pressure CVD, plasma CVD or sputtering.

8. An electro-optical device as claimed in any preceding claim characterised in that the non-linear resistive layer is provided over the whole surface of all picture elements.

9. An electro-optical device as claimed in any preceding claim characterised in that the amorphous alloy material further contains any one or more of hydrogen, phosphorous, boron or fluorine.

10. An electro-optical device as claimed in any preceding claim characterised by constituting a matrix display device.

# FIG.1

# FIG.2
## PRIOR ART

# FIG.3

F I G. 4

F I G. 5

F I G. 6

# F I G. 7

## DOCUMENTS CONSIDERED TO BE RELEVANT

EP 88308165.5

| Category | Citation of document with indication, where appropriate, of relevant passages | Relevant to claim | CLASSIFICATION OF THE APPLICATION (Int. Cl.4) |
|---|---|---|---|
| D,Y | EP - A2 - 0 202 092 (SEIKO)<br><br>* Abstract; fig. 1a,b; column 5, line 20 column 6, line 43; claims 1-5 * | 1-3,6, 7,9,10 | G 02 F 1/133 |
| Y,P | EP - A2 - 0 260 673 (KONISHIROKU)<br><br>* Fig. 3,5; column 5, line 14 - column 8, line 47 * | 1-3,6, 7,9,10 | |
| A | US - A - 4 667 189 (DEN BOER et al.)<br><br>* Abstract; column 5, lines 19-54; fig. 1-4; claims 18,20,21 33,34 * | 1-3,9, 10 | |
| D,A | EP - A2 - 0 182 484 (SEIKO)<br><br>* Abstract; claims 1,3; fig. 5,6 * | 1-3,5, 8 | TECHNICAL FIELDS SEARCHED (Int. Cl.4)<br><br>G 02 F |

The present search report has been drawn up for all claims

| Place of search | Date of completion of the search | Examiner |
|---|---|---|
| VIENNA | 15-12-1988 | GRONAU |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82